# EUROPÄISCHE PATENTSCHRIFT

(11) **EP 3 221 216 B1**
(45) Veröffentlichungstag und Bekanntmachung des Hinweises auf die Patenterteilung: **02.10.2019**
(21) Anmeldenummer: 15778263.2
(22) Anmeldetag: 07.10.2015
(51) Int. Cl.: B64C 39/02, B63B 35/50, B64F 1/12

(54) **SYSTEM SOWIE VERFAHREN ZUR EINHOLUNG EINES UNBEMANNTEN LUFTFAHRZEUGS**
SYSTEM AND METHOD FOR RECOVERING AN UNMANNED AIRCRAFT
SYSTÈME ET PROCÉDÉ DE HALAGE D'UN AÉRONEF SANS ÉQUIPAGE

(30) Priorität: 17.11.2014 DE 102014016914
(43) Veröffentlichungstag der Anmeldung: 27.09.2017
(73) Patentinhaber: thyssenkrupp Marine Systems GmbH, 24143 Kiel (DE); thyssenkrupp AG, 45143 Essen (DE)
(72) Erfinder: TREYDE, Hinnerk, 21521 Dassendorf (DE)
(74) Vertreter: thyssenkrupp Intellectual Property GmbH
(86) Internationale Anmeldenummer: PCT/EP2015/073084
(87) Internationale Veröffentlichungsnummer: WO 2016/078822

(56) Entgegenhaltungen:
- EP-A1- 0 611 693
- EP-A2- 2 218 642
- EP-A2- 2 371 715
- US-A- 5 039 034
- US-A1- 2008 156 932

## Beschreibung

Die Erfindung betrifft ein System zur Einholung eines unbemannten Luftfahrzeugs sowie ein Verfahren zur Einholung eines unbemannten Luftfahrtzeugs.

Unbemannte Luftfahrzeuge (unmanned aerial vehicle (UAV)) werden zunehmend eingesetzt, sowohl im zivilen wie im militärischen Bereich. UAV werden seit Kurzem auch als UAS (Unmanned Aircraft System) bezeichnet, wobei die ICAO (International Civil Aviation Organization) mit der Bezeichnung UAS die bisher übliche Bezeichnung UAV ablösen möchte. Die Begriffe UAV und UAS sind daher als Synonyme zu verstehen. Vorteile von UAV sind vielfältig. Zum einen können UAV auch für extrem lange Einsätze konstruiert werden. Es gibt UAV, welche für eine Einsatzzeit von über 80h konstruiert sind. Eine derart lange Einsatzzeit wäre für eine Besatzung eine extreme Belastung. Des Weiteren können UAV durch den Verzicht auf die Mitnahme wenigstens einer Person entsprechend klein und einfach konstruiert werden. Gerade bei UAV zum Einsatz in großen Höhen zum Beispiel im Bereich 10.000 m bis 20.000 m kann auf das Mitführen von Lebenserhaltungssystemen für die Besatzung verzichtet werden. Darüber hinaus können UAV auch für vergleichsweise risikobehaftete Missionen verwendet werden, da keine Gefährdung von Personen besteht. Darüber hinaus haben UAV weitere Vorteile, zum Beispiel die Möglichkeit der Automatisierung von Vorgängen.

Eine besondere Gruppe der UAV sind die VTOL UAV (Vertical Take-Off and Landing Unmanned Aerial Vehicle). Ein VTOL UAV ist ein senkrecht startendes und landendes UAV. Vorteil von VTOL UAV ist der vergleichsweise geringe Platzbedarf zum Starten und Landen, wodurch die Einsatzmöglichkeit deutlich erweitert wird. VTOL UAV umfassen insbesondere Kipprotor-UAV und Drehflügler-UAV. Drehflügler-UAV können wie Hubschrauber beispielsweise Einrotorsysteme mit Heckrotor oder mit Schubdüsen (ohne Heckrotor), Doppelrotorsysteme, zum Beispiel Koaxialrotorsysteme, Tandemsysteme oder Flettner-Doppelrotor-Systeme, oder Quadrocopter sein. Selbstverständlich sind auch Systeme mit mehr als vier Rotoren, insbesondere mit sechs oder acht Rotor denkbar und derzeit in Erprobung.

Beispiel für einen VTOL UAV ist beispielsweise der Camcopter S-100 (auch Schiebel S-100 genannt) des Herstellers Schiebel Elektronische Geräte. Der Camcopter S-100 ist ein 3,11 Meter langer und 97 kg schwerer VTOL UAV. Es ist wünschenswert, ein solches VTOL UAV auch von Bord eines Schiffes zu starten und dort wieder landen zu können, um die Vorteile einer unbemannten Aufklärung auch seegestützt nutzen zu können.

Ein Problem ist die relative Bewegung zwischen Landeplattform und UAV. Diese kann zum Beispiel durch starken Wind verursacht werden, da VTOL UAV vergleichsweise leicht sind und daher auch nur vergleichsweise schwach motorisiert sind. Bei einem Einsatz auf See kann sich zusätzlich durch den Wellengang die Landeplattform bewegen, was eine Ladung ebenfalls erschwert.

Aus der US 5,039,034 A ist ein System zu Einfang eines ferngesteuerten Fahrzeugs mit einer Schnur bekannt.

Aufgabe der Erfindung ist es, ein System bereitzustellen, dass eine sichere und schnelle Ladung eines unbemannten Luftfahrzeuges auf einer Landeplattform bei einer unkontrollierten relativen Bewegung zwischen dem unbemannten Luftfahrzeug und der Landeplattform ermöglicht.

Gelöst wird die Aufgabe durch ein System zur Einholung eines unbemannten Luftfahrzeugs mit den in Anspruch 1 angegebenen Merkmalen. Des Weiteren wird die Aufgabe durch ein Verfahren zur Einholung eines unbemannten Luftfahrzeugs mit den in Anspruch 8 angegebenen Merkmalen gelöst. Vorteilhafte Weiterbildungen ergeben sich aus den Unteransprüchen, der nachfolgenden Beschreibung sowie den Zeichnungen.

Das erfindungsgemäße System zur Einholung eines unbemannten Luftfahrzeugs umfasst eine Landeplattform und ein unbemanntes Luftfahrzeug. Bei dem unbemannten Luftfahrzeug handelt es sich um ein senkrecht landendes unbemanntes Luftfahrzeug. Die Landeplattform weist ein Gitter auf. Das unbemannte Luftfahrzeug weist eine Schnur auf, wobei die Schnur an einem Ende ein Gewicht aufweist. Unter Schnur ist jedes geeignete längliche, flexible und aufwickelbare Objekt zu verstehen. Eine Schnur kann beispielsweise als Seil, Faden, Band oder dergleichen ausgeführt sein. Die Schnur und das Gewicht können vorzugsweise während des Fluges des unbemannten Luftfahrzeugs innerhalb des unbemannten Luftfahrzeugs angeordnet sein und erst unmittelbar vor der Landung auf der Landeplattform ausgeklinkt bzw. herabgelassen werden. Das Gewicht passt durch das Gitter, das unbemannte Luftfahrzeug passt nicht durch das Gitter.

In einer weiteren Ausführungsform weist die Landeplattform eine Winde auf. Die Winde kann sowohl manuell als auch elektrisch drehbar sein. Eine manuelle Betätigung der Winde ist vorteilhaft, da hierbei der Benutzer zum einen das unbemannte Luftfahrzeug beobachten kann und bei einer ungünstigen Anordnung der Landeplattform zum unbemannten Luftfahrzeug zum Beispiel durch Wellengang oder eine Windböe den Vorgang des Einholens der Schnur verlangsamen oder einstellen kann. Die Winde weist eine Vorrichtung zur Aufnahme des Gewichts auf. Hierdurch kann das Gewicht einfach mit der Winde verbunden werden und somit die Schnur einfach durch die Winde eingeholt werden. Die Winde ist zur Einholung der Schnur und zur Einholung des unbemannten Luftfahrzeugs ausgebildet. Damit die Winde zur Einholung der Schnur besonders geeignet ist, sollte die Winde unter anderem in der Lage sein, die Schnur in voller Länge aufzunehmen. Die Verwendung einer Winde ist besonders vorteilhaft, da ein Einholen der Schnur auch gegen den Auftrieb des unbemannten Luftfahrzeugs einfach möglich ist.

In einer weiteren Ausführungsform ist die Winde unterhalb des Gitters angeordnet. Durch die Anordnung der Winde unter dem Gitter kann der Benutzer diesen Bereich gefahrlos benutzen, da das unbemannte Luftfahrzeug auf dem Gitter landet und somit keine Gefährdung für den Bereich unterhalb des Gitters durch das unbemannte Luftfahrzeug auftritt. Des Weiteren kann durch die Anordnung unterhalb eine Umleitung der Schnur vermieden werden, wenn die Winde beispielsweise oberhalb des Gitters neben diesem angeordnet ist. Eine derartige Anordnung ist zwar möglich, insbesondere wenn die Vorrichtung zur Aufnahme des Gewichts derart ausgebildet ist, dass diese selber beispielsweise über eine Schnur mit der Winde verbunden ist. Auf diese zusätzlichen und somit auch störanfälligen Bauteile kann jedoch verzichtet werden, sofern die Winde unterhalb des Gitters angeordnet ist.

In einer weiteren Ausführungsform weist das Gewicht die Form eines doppelten Kegels auf. Die Form des doppelten Kegels ist vorteilhaft, da so sichergestellt werden kann, dass das Gewicht sich nicht am Gitter verhakt. Die Form des doppelten Kegels weist ein spitzes Ende am oberen Ende und ein spitzes Ende am unteren Ende auf. In der Mitte weist der doppelte Kegel einen kreisförmigen Querschnitt auf. Somit ist diese Form ideal, um in beide Richtungen durch das Gitter zu gelangen.

In einer weiteren Ausführungsform ist die Vorrichtung zur Aufnahme des Gewichts ein Haken ist. Die Schnur oberhalb des Gewichts kann relativ leicht durch einen Haken eingeführt werden, wobei der Haken kleiner als das Gewicht ausgeführt sein muss, damit das Gewicht durch den Haken gegriffen werden kann.

In einer bevorzugten Ausführungsform ist die Landeplattform Teil eines Schiffs. Besonders bevorzugt ist die Landeplattform Teil des Hecks eines Schiffs.

In einer weiteren bevorzugten Ausführungsform ist das unbemannte Luftfahrzeug ein Drehflügler.

In einem weiteren Aspekt betrifft die Erfindung ein Landfahrzeug mit einer erfindungsgemäßen Landeplattform.

In einem weiteren Aspekt betrifft die Erfindung eine Landstation mit einer erfindungsgemäßen Landeplattform.

In einem weiteren Aspekt betrifft die Erfindung ein Verfahren zur Einholung eines unbemannten Luftfahrzeugs auf einer Landeplattform unter Verwendung eines erfindungsgemäßen Systems zur Einholung eines unbemannten Luftfahrzeugs. Das Verfahren weist die folgenden Verfahrensschritte auf.

In Verfahrensschritt a) wird das unbemannte Luftfahrzeug oberhalb der Landeplattform angeordnet.

In Verfahrensschritt b) wird das Gewicht durch das Gitter herabgelassen.

In Verfahrensschritt c) wird das Gewicht durch die Vorrichtung zur Aufnahme des Gewichts aufgenommen.

In Verfahrensschritt d) wird die Schnur durch die Winde eingeholt.

In Verfahrensschritt e) setzt das unbemannte Luftfahrzeug auf dem Gitter auf.

In einer weiteren Ausführungsform wird der Verfahrensschritt d) zeitlich unterbrochen, sofern das unbemannte Luftfahrzeug nicht senkrecht oberhalb des Gitters angeordnet ist. Hierdurch soll verhindert werden, dass das unbemannte Luftfahrzeug eingeholt wird, wenn zum Beispiel durch Wellenbewegung oder eine Böe Landeplattform und unbemanntes Luftfahrzeug eine ungünstige Position zueinander haben. Würde in einer solchen Konstellation die Schnur derart verkürzt, dass das unbemannte Luftfahrzeug neben dem Gitter aufsetzen würde, könnte dieses zu einer Beschädigung des unbemannten Luftfahrzeugs und unter Umständen auch zu einer Beschädigung der Landeplattform kommen. Neben einer Unterbrechung kann auch eine beschleunigte Einholung der Schnur erfolgen, wenn unbemanntes Luftfahrzeug und Landeplattform eine günstige Position zueinander haben und/oder wenn durch das beschleunigte Einholen der Schnur ein Abdriften des unbemannten Luftfahrzeugs beispielsweise aufgrund von Wind vermieden werden kann.

Nachfolgend ist das erfindungsgemäße System zur Einholung eines unbemannten Luftfahrzeugs und das erfindungsgemäße Verfahren zur Einholung eines unbemannten Luftfahrzeugs auf einer Landeplattform unter Verwendung eines erfindungsgemäßen Systems zur Einholung eines unbemannten Luftfahrzeugs anhand eines in den Zeichnungen dargestellten Ausführungsbeispiels näher erläutert.
- Figur 1:: schematische Darstellung eines Systems zur Einholung eines unbemannten Luftfahrzeugs
- Figur 2:: Ablaufdiagramm eines Verfahrens zur Einholung eines unbemannten Luftfahrzeugs auf einer Landeplattform

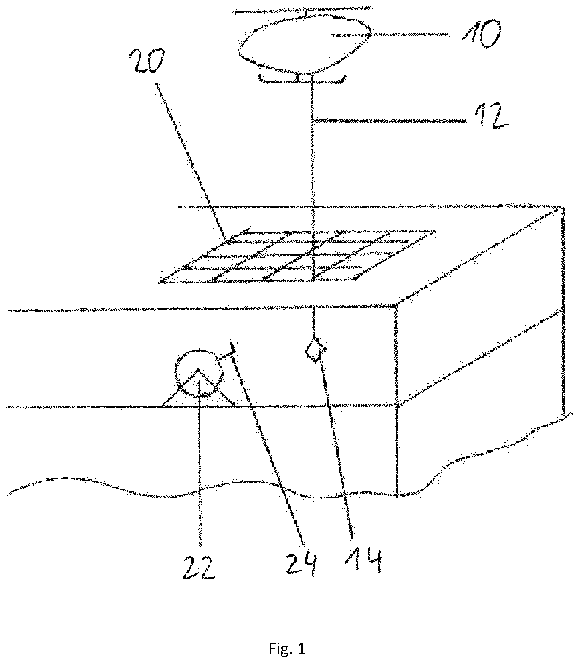

In Figur 1 ist ein System zur Einholung eines unbemannten Luftfahrzeugs schematisch dargestellt. Bei dem unbemannten Luftfahrzeug 10 handelt es sich um einen Drehflügler, hier beispielhaft als Einrotorsystem gezeigt. Eine Stabilisierung über einen Heckrotor oder entsprechende Düsen wurde zur Vereinfachung nicht dargestellt. Das unbemannte Luftfahrzeug 10 weist eine Schnur 12 und ein Gewicht 14 auf. Das Gewicht 14 ist als doppelter Kegel ausgeführt. Die Landeplattform ist beispielhaft in einem Heck eines Schiffes gezeigt. Das Gewicht 14 wurde durch das Gitter 20 herabgelassen und kann von der Winde 22 über einen Haken 24 aufgenommen werden. Hierdurch kann das unbemannte Luftfahrzeug 10 durch Einholen der Schnur 12 mittels der Winde 22 zur Landung auf dem Gitter 20 gebracht werden.

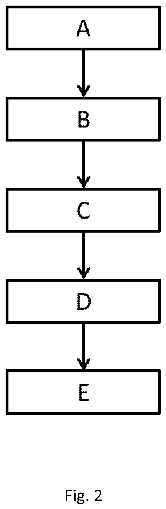

In Figur 2 ist das Verfahren zur Einholung eines unbemannten Luftfahrzeugs auf einer Landeplattform als Ablaufdiagramm dargestellt.

In A wird das unbemannte Luftfahrzeug 10 oberhalb der Landeplattform angeordnet.

In B wird das Gewicht 14 durch das Gitter 20 herabgelassen. Hierzu wird zunächst das Gewicht 14 an der Schnur 12 vom unbemannten Luftfahrzeug herabgelassen. Anschließend verringert das unbemannte Luftfahrzeug 10 seine Höhe oberhalb der Landeplattform, sodass das Gewicht 14 durch das Gitter 20 gelangt.

In C wird das Gewicht 14 durch die Vorrichtung zur Aufnahme des Gewichts 14 aufgenommen.

In D wird die Schnur 12 durch die Winde 22 eingeholt.

In E setzt das unbemannte Luftfahrzeug 10 auf dem Gitter 20 auf.

Vorzugsweise befindet sich unterhalb des Gitters 20 auf der Ebene der Winde 22 eine Person, welche das Gewicht 14 ergreift und am Haken 24 befestigt. Dieses entspricht Punkt C.

Anschließend betätigt die Person die Winde in Punkt D manuell und achtet dabei durch das Gitter 20 darauf, dass sich das unbemannte Luftfahrzeug 10 oberhalb des Gitters befindet.

Bei starkem Seegang oder starkem Wind kann die Drohne nach Schritt C an durch zusätzliche Leistung an den Rotoren an der Schnur zu ziehen, während die Winde in Schritt D die Drohne herunterzieht. Hierdurch wird bei einer Aufwärtsbewegung der Landeplattform auf dem Schiff die Schnur entlastet und die Drohne folgt der Bewegung der Landeplattform ohne sie zu berühren. Bei einer Abwärtsbewegung der Landeplattform kann die Drohne schnell auf die Plattform gezogen werden.

Zur Automatisierung kann die Winde Detektionsmittel aufweisen, mittels der sie abgeschaltet wird, wenn sich die Drohne an Deck befindet. Dieses Detektionsmittel könnte beispielsweise am Seil befestigt sein oder eine Überlastabschaltung der Winde sein. Beispielsweise kann am Seil eine Scheibe angebracht werden, die nicht durch das Gitter passt. Hierdurch entsteht ein Zugwiderstand, welcher eine Überlast an der Winde auslöst, wodurch die Winde dann abschaltet werden kann.

### Bezugszeichen:

- 10: unbemanntes Luftfahrzeug
- 12: Schnur
- 14: Gewicht
- 20: Gitter
- 22: Winde
- 24: Haken

## Patentansprüche

1. System zur Einholung eines unbemannten Luftfahrzeugs (10), wobei das System eine Landeplattform und ein unbemanntes Luftfahrzeug (10) umfasst, wobei es sich bei dem unbemannten Luftfahrzeug (10) um ein senkrecht landendes unbemanntes Luftfahrzeug (10) handelt, wobei die Landeplattform ein Gitter (20) aufweist, **dadurch gekennzeichnet, dass** das unbemannte Luftfahrzeug (10) eine Schnur (12) aufweist, wobei die Schnur (12) an einem Ende ein Gewicht (14) aufweist, wobei das Gewicht (14) durch das Gitter (20) passt und wobei das unbemannte Luftfahrzeug (10) nicht durch das Gitter passt.

2. System zur Einholung eines unbemannten Luftfahrzeugs (10) nach Anspruch 1, **dadurch gekennzeichnet, dass** die Landeplattform eine Winde (22) aufweist, wobei die Winde (22) eine Vorrichtung zur Aufnahme des Gewichts (14) aufweist und wobei die Winde (22) zur Einholung der Schnur (12) und zur Einholung des unbemannten Luftfahrzeugs (10) ausgebildet ist.

3. System zur Einholung eines unbemannten Luftfahrzeugs (10) nach einem der vorangegangenen Ansprüche, **dadurch gekennzeichnet, dass** die Winde (22) unterhalb des Gitters (20) angeordnet ist.

4. System zur Einholung eines unbemannten Luftfahrzeugs (10) nach einem der vorangegangenen Ansprüche, **dadurch gekennzeichnet, dass** das Gewicht (14) die Form eines doppelten Kegels aufweist.

5. System zur Einholung eines unbemannten Luftfahrzeugs (10) nach einem der vorangegangenen Ansprüche, **dadurch gekennzeichnet, dass** die Vorrichtung zur Aufnahme des Gewichts (14) ein Haken (24) ist.

6. System zur Einholung eines unbemannten Luftfahrzeugs (10) nach einem der vorangegangenen Ansprüche, **dadurch gekennzeichnet, dass** die Landeplattform Teil eines Schiffs ist.

7. System zur Einholung eines unbemannten Luftfahrzeugs (10) nach einem der vorangegangenen Ansprüche, **dadurch gekennzeichnet, dass** das unbemannte Luftfahrzeug (10) ein Drehflügler ist.

8. Verfahren zur Einholung eines unbemannten Luftfahrzeugs (10) auf einer Landeplattform unter Verwendung eines Systems zur Einholung eines unbemannten Luftfahrzeugs (10) nach einem der Ansprüche 1 bis 7, wobei das Verfahren folgende Verfahrensschritte aufweist:
a) Anordnen des unbemannten Luftfahrzeugs (10) oberhalb der Landeplattform,
b) Herablassen des Gewichts (14) durch das Gitter (20),
c) Aufnahme des Gewichts (14) durch eine Vorrichtung zur Aufnahme des Gewichts (14),
d) Einholen der Schnur (12) durch eine Winde (22) und
e) Aufsetzen des unbemannten Luftfahrzeugs (10) auf dem Gitter (20).

9. Verfahren zur Einholung eines unbemannten Luftfahrzeugs (10) auf einer Landeplattform nach Anspruch 8, **dadurch gekennzeichnet, dass** Verfahrensschritt d) zeitlich unterbrochen wird, sofern das unbemannte Luftfahrzeug (10) nicht senkrecht oberhalb des Gitters (20) angeordnet ist.

## Claims

1. System for recovering an unmanned aircraft (10), wherein the system comprises a landing platform and an unmanned aircraft (10), wherein the unmanned aircraft (10) is a vertical-landing unmanned aircraft (10), wherein the landing platform comprises a grid (20), **characterized in that** the unmanned aircraft (10) comprises a cord (12), wherein the cord (12) comprises a weight (14) at one end, wherein the weight (14) fits through the grid (20) and wherein the unmanned aircraft (10) does not fit through the grid.

2. System for recovering an unmanned aircraft (10) according to Claim 1, **characterized in that** the landing platform comprises a winch (22), wherein the winch (22) comprises a device for receiving the weight (14) and wherein the winch (22) is designed to haul in the cord (12) and to recover the unmanned aircraft (10).

3. System for recovering an unmanned aircraft (10) according to either of the preceding claims, **characterized in that** the winch (22) is arranged below the grid (20).

4. System for recovering an unmanned aircraft (10) according to one of the preceding claims, **characterized in that** the weight (14) comprises the shape of a doubled cone.

5. System for recovering an unmanned aircraft (10) according to one of the preceding claims, **characterized in that** the device for receiving the weight (14) is a hook (24).

6. System for recovering an unmanned aircraft (10) according to one of the preceding claims, **characterized in that** the landing platform is part of a ship.

7. System for recovering an unmanned aircraft (10) according to one of the preceding claims, **characterized in that** the unmanned aircraft (10) is a rotorcraft.

8. Method for recovering an unmanned aircraft (10) on a landing platform using a system for recovering an unmanned aircraft (10) according to one of Claims 1 to 7, wherein the method comprises the following method steps:
a) arranging the unmanned aircraft (10) above the landing platform,
b) letting the weight (14) down through the grid (20),
c) receiving the weight (14) by means of a device for receiving the weight (14),
d) hauling in the cord (12) by means of a winch (22), and
e) setting the unmanned aircraft (10) down on the grid (20).

9. Method for recovering an unmanned aircraft (10) on a landing platform according to Claim 8, **characterized in that** method step d) is temporally interrupted if the unmanned aircraft (10) is not arranged vertically above the grid (20).

## Revendications

1. Système de récupération d'un véhicule aérien sans pilote (10), le système comprenant une plate-forme d'atterrissage et un véhicule aérien sans pilote (10), le véhicule aérien sans pilote (10) étant un véhicule aérien sans pilote (10) à atterrissage vertical, la plate-forme d'atterrissage comprenant une grille (20), **caractérisé en ce que** le véhicule aérien sans pilote (10) comprend un cordon (12), le cordon (12) ayant un poids (14) à une extrémité, le poids (14) passant à travers la grille (20) et le véhicule aérien sans pilote (10) ne passant pas à travers la grille.

2. Système de récupération d'un véhicule aérien sans pilote (10) selon la revendication 1, **caractérisé en ce que** la plate-forme d'atterrissage comprend un treuil (22), le treuil (22) comportant un dispositif de récupération du poids (14) et le treuil (22) étant conçu pour récupérer le cordon (12) et pour récupérer le véhicule aérien sans pilote (10).

3. Système de récupération d'un véhicule aérien sans pilote (10) selon l'une des revendications précédentes, **caractérisé en ce que** le treuil (22) est disposé sous la grille (20).

4. Système de récupération d'un véhicule aérien sans pilote (10) selon l'une des revendications précédentes, **caractérisé en ce que** le poids (14) a la forme d'un double cône.

5. Système de récupération d'un véhicule aérien sans pilote (10) selon l'une des revendications précédentes, **caractérisé en ce que** le dispositif de réception du poids (14) est un crochet (24).

6. Système de récupération d'un véhicule aérien sans pilote (10) selon l'une des revendications précédentes, **caractérisé en ce que** la plate-forme d'atterrissage fait partie d'un navire.

7. Système de récupération d'un véhicule aérien sans pilote (10) selon l'une des revendications précédentes, **caractérisé en ce que** le véhicule aérien sans pilote (10) est un giravion.

8. Procédé de récupération d'un véhicule aérien sans pilote (10) sur une plate-forme d'atterrissage à l'aide d'un système de récupération de véhicule aérien sans pilote (10) selon l'une des revendications 1 à 7, le procédé comprenant les étapes suivantes :
a) placer le véhicule aérien sans pilote (10) au-dessus de la plate-forme d'atterrissage,
b) faire descendre le poids (14) à travers la grille (20),
c) recevoir le poids (14) à l'aide d'un dispositif de réception de poids (14),
d) récupérer le cordon (12) à l'aide d'un treuil (22) et
e) placer le véhicule aérien sans pilote (10) sur la grille (20).

9. Procédé de récupération d'un véhicule aérien sans pilote (10) sur une plate-forme d'atterrissage selon la revendication 8, **caractérisé en ce que** l'étape d) est temporellement interrompue à condition que le véhicule aérien sans pilote (10) ne soit pas disposé verticalement au-dessus de la grille (20).
